(19)

**Europäisches Patentamt**
**European Patent Office**
**Office européen des brevets**

(11)  **EP 3 006 420 B1**

(12)  **EUROPEAN PATENT SPECIFICATION**

(45) Date of publication and mention
of the grant of the patent:
**21.02.2018  Bulletin 2018/08**

(21) Application number: **13885594.5**

(22) Date of filing: **31.05.2013**

(51) Int Cl.:
*C04B 35/591* (2006.01)      *C04B 35/584* (2006.01)
*C04B 35/587* (2006.01)

(86) International application number:
**PCT/JP2013/065248**

(87) International publication number:
**WO 2014/192149 (04.12.2014 Gazette 2014/49)**

(54) **CERAMIC SINTERED BODY, AND ANTICORROSION MEMBER, FILTER AND ANTIHALATION MEMBER FORMED USING SAME**

KERAMIKSINTERKÖRPER UND KORROSIONSHEMMENDES ELEMENT, FILTER UND LICHTHOFSCHUTZELEMENT DAMIT

CORPS FRITTÉ CÉRAMIQUE ET ÉLÉMENT ANTICORROSION, FILTRE ET ÉLÉMENT ANTI-HALO FORMÉS AVEC LEDIT CORPS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.04.2016  Bulletin 2016/15**

(73) Proprietor: **Kyocera Corporation
Kyoto-shi, Kyoto 612-8501 (JP)**

(72) Inventors:
• **HIRANO, Yoshinori
Kyoto-shi
Kyoto 612-8501 (JP)**
• **ISHIKAWA, Kazuhiro
Kyoto-shi
Kyoto 612-8501 (JP)**

• **ODA, Takehiro
Kyoto-shi
Kyoto 612-8501 (JP)**

(74) Representative: **Viering, Jentschura & Partner
mbB
Patent- und Rechtsanwälte
Am Brauhaus 8
01099 Dresden (DE)**

(56) References cited:
**JP-A- H0 840 775      JP-A- H03 275 563
JP-A- H05 330 921      JP-A- 2011 133 011
JP-B2- 4 717 635**

**Description**

Technical Field

The present invention relates to a ceramic sintered body, and an anticorrosion member, a filter, and an antihalation member formed using the same.

Background Art

Silicon nitride sintered bodies have nowadays been used for industrial components, including engine components, members for molten metal, and cutting tools.

As an example of such silicon nitride sintered bodies, in Patent Literature 1, there is proposed a silicon nitride sintered body containing iron silicide particles ranging in average particle size from 5 to 30 $\mu$m in an amount of 0.5 to 9% by volume.

JP 4717635 B2 discloses a silicon nitride sintered material, and JP 2011 133011 A discloses a ceramic having a content of silicon nitride of 81.8 mass% or more.

Citation List

Patent Literature

Patent Literature 1: Japanese Unexamined Patent Publication JP-A 9-227236 (1997)

Summary of Invention

Technical Problem

Although the addition of iron silicide can be considered as a way to achieve an enhancement in thermal shock resistance in a silicon nitride sintered body, if iron silicide is contained in an unduly large amount, the silicon nitride sintered body will bear an excessive amount of iron silicide in its surface portion, with the consequence that due to oxidation of iron silicide the sintered body may undergo changes in color.

The invention has been devised to solve the problem as mentioned supra, and accordingly an object of the invention is to provide a ceramic sintered body in which an iron silicide content in its surface portion is controlled so that high thermal shock resistance can be attained and yet discoloration can be minimized.

Solution to Problem

The present invention provides a ceramic sintered body according to claim 1, an anticorrosion member according to claim 10, a filter according to claim 11, and an antihalation member according to claim 12. Further advantageous embodiments of the present invention are disclosed in the dependent claims.

Advantageous Effects of Invention

According to the invention, the ceramic sintered body comprises silicon nitride in an amount of greater than or equal to 80% by mass based on a total mass of the ceramic sintered body, and iron silicide is scattered in a surface portion of the ceramic sintered body, and particles of the compounds have an equivalent circle diameter of 0.05 $\mu$m or more but 5 $\mu$m or less are present in a number of greater than or equal to $2.0 \times 10^4$ but less than or equal to $2.0 \times 10^5$ per 1 mm$^2$. Thus, the ceramic sintered body is excellent in thermal shock resistance and is less prone to discoloration.

Moreover, according to the invention, the anticorrosion member, being formed of the ceramic sintered body, is excellent in thermal shock resistance and is less prone to discoloration.

Moreover, according to the invention, the filter, being formed of the ceramic sintered body, is excellent in thermal shock resistance and is less prone to discoloration.

Moreover, according to the invention, the antihalation member, being formed of the ceramic sintered body, is excellent in thermal shock resistance and is less prone to discoloration.

Brief Description of Drawings

FIG. 1 is a vertical cross-sectional view of a heater tube showing an example of an anticorrosion member formed of the ceramic sintered body according to the present embodiment;

FIG. 2 is a diagram showing a fishing line guide ring which is an example of an anticorrosion member formed of the ceramic sintered body according to the present embodiment, and a fishing line guide equipped with the fishing line guide ring, and more specifically FIG. 2(a) is a plan view of the fishing line guide ring, and FIG. 2(b) is a perspective view of the fishing line guide equipped with the fishing line guide ring shown in FIG. 2(a); and

FIG. 3 is a schematic sectional view schematically showing an example of a filter formed of the ceramic sintered body according to the present embodiment and a gas treatment apparatus incorporating the filter.

Description of Embodiments

A ceramic sintered body according to the present embodiment contains silicon nitride in an amount of greater than or equal to 80% by mass based on the total mass defined as 100% by mass of constituents of the ceramic sintered body, and, compounds containing Fe and Si (hereafter also referred to simply as "compounds") are scattered in a surface portion of the ceramic sintered body, and, particles of the compounds having an equivalent circle diameter of 0.05 $\mu$m or more but 5 $\mu$m or less are present in a number of greater than or equal to $2.0 \times 10^4$ but less than or equal to $2.0 \times 10^5$ per 1 mm$^2$. As employed in the present embodiment, the term "surface portion" refers to a surficial part of the ceramic sintered body extending inwardly from the top surface at a depth of less than 1 mm, and, the term "interior" refers to other part of the ceramic sintered body than the surface portion. In such a ceramic sintered body, particles of the compounds having an equivalent circle diameter of 0.05 $\mu$m or more but 5 $\mu$m or less are present in a number of greater than or equal to $2.0 \times 10^4$ but less than or equal to $2.0 \times 10^5$ per 1 mm$^2$, since the thermodynamically stable compounds are scattered within the prescribed range, it is possible to achieve an enhancement in thermal shock resistance, as well as to suppress a change in color which results from oxidation of the ceramic sintered body (hereafter referred to simply as "oxidation-induced discoloration").

The compound containing Fe and Si refers to a compound composed of Fe and Si, or a compound composed of Fe, Si, and at least one of substances selected from among oxygen, tungsten, aluminum, magnesium, calcium, sodium, and potassium.

While examples of the compound composed of Fe and Si include compounds that are expressed in compositional formula form as: $FeSi_3$, $FeSi_2$, $FeSi$, $Fe_2Si_3$, $Fe_3Si$, $Fe_3Si_2$, $Fe_3Si_4$, $Fe_3Si_7$, $Fe_5Si_2$, and $Fe_5Si_3$, respectively, in the following description, the compound will be defined as $FeSi_2$.

Moreover, the presence of the compound containing Fe and Si in the surface portion of the ceramic sintered body can be checked by examining the condition of distribution of elements present in the surface portion by means of energy dispersive X-ray spectrometry, and identifying crystals present in the surface portion by means of X-ray diffraction analysis.

Moreover, the number of particles of the compounds having 0.05 $\mu$m or more but 5 $\mu$m or less in an equivalent circle diameter per 1 mm$^2$ may be determined in a process known as particle analysis involving a step of, for example, setting an analysis range at an area of $10.8 \times 10^4$ $\mu$m$^2$ (127 $\mu$m in transverse length and 85.3 $\mu$m in longitudinal length) under a scanning electron microscope of a magnification of 1000 times, a step of capturing an image of this range by a CCD camera, and a step of analyzing this image with use of IMAGE ANALYSIS SOFTWARE "AZO-KUN" (trademark) manufactured by Asahi Kasei Engineering Corporation. As the conditions to be fulfilled in this process, the level of lightness is low (dark), binarization is effected manually, the area of small-figure removal is 5 $\mu$m$^2$, and a threshold value which is a measure of the contrast of the image is set to be greater than or equal to 0.8 times but less than or equal to 2 times the value of a peak in a histogram indicative of the brightness of each point (pixel) in the image. An optical microscope may be used instead of the scanning electron microscope.

Moreover, an anticorrosion member, a filter, or an antihalation member formed of the ceramic sintered body according to the present embodiment excels in resistance to thermal shock and is capable of suppression of oxidation-induced discoloration as above described.

Examples of the anticorrosion member include a heater tube for molten metal, a fishing line guide ring, and structural components for semiconductor manufacturing equipment. Examples of the filter include one for collecting particulates contained in gaseous emission from internal combustion engines, incinerators, boilers, etc., or impurities in water, and more specifically a filter through which exhaust gas or water passes, for causing particulates or impurities to collect on the surface of a ceramic sintered body. Moreover, examples of the antihalation member include a member for preventing occurrence of halation which is a phenomenon in which an area around a part exposed to intense light appears blurred in a whitish color. For example, the antihalation member is attached to quality inspection equipment incorporating an optical apparatus such as a CCD camera for inspection of an electronic component and so forth.

Moreover, the ceramic sintered body according to the present embodiment advisably contains silicon nitride in an amount of greater than or equal to 80% by mass based on the total mass defined as 100% by mass of constituents of the ceramic sintered body, or preferably contains silicon nitride in an amount of greater than or equal to 85% by mass in view of further improvement in heat-dissipation characteristics and mechanical strength. The content of silicon nitride is determined by measuring the amount of nitrogen contained in the ceramic sintered body by nitrogen analytical equipment and performing calculation of conversion from the nitrogen content to a silicon nitride content.

Moreover, the content of each element constituting the ceramic sintered body can be determined by means of fluorescent X-ray analysis or ICP (Inductively Coupled Plasma) emission spectrometry.

Moreover, in the ceramic sintered body according to the present embodiment, at least one of monticellite ($CaMgSiO_4$) and merwinite ($Ca_3MgSi_2O_8$) is preferably included in the crystal grain boundary phase of the silicon nitride (hereafter referred to simply as "grain boundary phase"). There is no problem even if the grain boundary phase contains other crystal phase than monticellite and merwinite or amorphous phase.

According to such a ceramic sintered body, as compared to a ceramic sintered body including neither monticellite nor merwinite in its grain boundary phase, the content of amorphous phase in the grain boundary phase is relatively low. Thus, the ceramic sintered body according to the present embodiment has a relatively low content of amorphous phase which is susceptible to corrosion by an acid or alkaline component, and is therefore capable of maintaining high mechanical strength even under exposure to an acid or alkaline component, and also, the ceramic sintered body has a relatively low content of amorphous phase which is prone to elution under high-temperature conditions in particular, and is therefore resistant to deformation even when it is subjected to high temperature. Moreover, the crystal phase of monticellite or merwinite is higher in thermal conductivity than amorphous phase, wherefore the ceramic sintered body according to the present embodiment tends to have improved heat-dissipation characteristics.

Moreover, the ceramic sintered body according to the present embodiment is preferably designed so that the total sum of a monticellite content and a merwinite content in the surface portion is greater than the total sum of a monticellite content and a merwinite content in the interior. In this case, the surface portion is relatively low compared to the interior in the content of amorphous phase in the grain boundary phase, wherefore an improvement in not only corrosion resistance but also wear and abrasion resistance can be achieved in the surface portion in particular. For example, a comparison in total content is made by measuring the peak intensities, respectively, of monticellite and merwinite in each of the surface portion and the interior of the ceramic sintered body by the X-ray diffractometry, summing the highest peak intensities, and making comparison between them.

Moreover, the ceramic sintered body according to the present embodiment is preferably designed so that, in the surface portion, the ratio $\{(I_1 + I_2)/I_0 \times 100\}$ is greater than or equal to 4%, in which $I_1$ denotes a peak intensity of monticellite at the angle of diffraction ranging from 34° to 35°obtained by the X-ray diffractometry, $I_2$ denotes a peak intensity of merwinite at the angle of diffraction ranging from 34° to 35° obtained by the X-ray diffractometry, and $I_0$ denotes a peak intensity of silicon nitride at the angle of diffraction ranging from 27° to 28 ° obtained by the X-ray diffractometry. Fulfillment of this range makes it possible to control the content of amorphous phase in the grain boundary phase to be low in the surface portion, and thereby achieve an improvement in not only corrosion resistance but also wear and abrasion resistance.

Moreover, the ceramic sintered body according to the present embodiment includes aluminum and calcium in the grain boundary phase.

The inclusion of aluminum and calcium in the grain boundary phase is desirable, because, in the formation of their oxides, oxygen contained in silicon nitride crystal is taken into the grain boundary phase, thus causing a decrease of voids in the silicon nitride crystal, wherefore the ceramic sintered body tends to have improved heat-dissipation characteristics.

Given that aluminum is contained, on an oxide basis ($Al_2O_3$), in an amount of greater than or equal to 2% by mass but less than or equal to 8% by mass, or particularly in an amount of greater than or equal to 3% by mass but less than or equal to 7% by mass based on the total mass defined as 100% by mass of constituents of the ceramic sintered body, and that calcium is contained, on an oxide basis ($CaO$), in an amount of greater than or equal to 2% by mass but less than or equal to 8% by mass, or particularly in an amount of greater than or equal to 3% by mass but less than or equal to 7% by mass based on the total mass, then, in addition to monticellite or merwinite, aluminum and calcium tend to be contained easily as grain boundary phase. As a matter of course, there is no problem even if the ceramic sintered body according to the present embodiment contains inevitable impurities.

Moreover, in the ceramic sintered body according to the present embodiment, at least one of gehlenite ($Ca_2Al_2SiO_7$) and calcium silicate ($CaSiO_3$, $Ca_2SiO_4$, or $Ca_3SiO_5$, for example) is preferably included in the grain boundary phase. This makes it possible to achieve further reduction in amorphous phase in the grain boundary phase, and thereby maintain higher mechanical strength and also render the ceramic sintered body less prone to deformation even under exposure to high temperature. Moreover, the crystal phase of gehlenite or calcium silicate is higher in thermal conductivity than amorphous phase, wherefore the ceramic sintered body tends to have higher thermal conductivity.

Moreover, the ceramic sintered body according to the present embodiment is preferably designed to contain no metallic silicon in its interior. In the ceramic sintered body which does not contain, in its interior, metallic silicon which differs in linear expansion coefficient from silicon nitride serving as a major constituent, as compared to a case where metallic silicon is contained in the interior, cracking is less likely to occur even under repeated application of heat.

The absence of metallic silicon in the interior of the ceramic sintered body may be determined by analyzing crystals present in a part of the section of the ceramic sintered body which corresponds to the interior, using the X-ray diffractometry, to examine the absence of a peak at a diffraction angle (2θ) (ranging from 28° to 29°) corresponding to metallic silicon. That is, when the result of the X-ray diffraction analysis shows that there is no peak at the diffraction angle (2θ) (ranging from 28° to 29°), then the ceramic sintered body is considered to contain no metallic silicon in the interior.

Moreover, in a case where the ceramic sintered body according to the present embodiment is formed as a porous body, it is preferable that, the ratio p75/p25 is greater than or equal to 1.1 but less than or equal to 1.5, in which p75 denotes a pore size corresponding to 75% of cumulative pore volume in a pore-size cumulative distribution curve, and p25 denotes a pore size corresponding to 25% of cumulative pore volume in the pore-size cumulative distribution curve. When the ratio p75/p25 falls within this range, variations in pore size can be reduced. Therefore, for example, in the case of using such a ceramic sintered body for a filter, the filter tends to have higher thermal shock resistance and improved mechanical characteristics, and is thus resistant to cracking even when heat treatment is performed repeatedly on collected matters for burning removal. Moreover, in the case of using such a ceramic sintered body for an antihalation member, unevenness in the number of pores throughout the antihalation member can be reduced, wherefore part of light incident on the ceramic member enters the pores evenly, thus achieving efficient prevention of halation.

As employed in the present embodiment, the term "porous body" refers to a ceramic sintered body having a porosity of greater than or equal to 30% by volume but less than or equal to 65% by volume, and, the porosity can be determined by means of mercury porosimetry.

Moreover, the pore size (p25, p75) of pores of the ceramic sintered body may be obtained by, for example, determining the sizes of pores of the ceramic sintered body using the following formula (1), and then defining a pore size corresponding to 25% of cumulative pore volume and a pore size corresponding to 75% of cumulative pore volume on the basis of a pore-size cumulative distribution curve as the pore size p25 and the pore size p75, respectively. The pore-size cumulative distribution curve refers to a curve indicative of the cumulative distribution of pore sizes in a two-dimensional graph on which the abscissa represents pore size, and the ordinate represents percentage of cumulative pore volume of pores, and the curve shows the range of distribution of pore sizes.

The pore size p25 and the pore size p75 of pores of the ceramic sintered body may be determined in conformance with the mercury porosimetry. More specifically, first, a sample is cut from the ceramic sintered body so that the mass of the sample is greater than or equal to 2 g but less than or equal to 3 g. Then, mercury is injected into the pores of the sample under pressure using a mercury porosimeter to measure the pressure applied to mercury and the volume of mercury which has found its way into the pore.

The volume of mercury is equal to the volume of the pore, and thus the pressure applied to mercury and pore size are given by the following formula (1) (Washburn's Equation):

$$p = -4\sigma\cos\theta/P \qquad (1)$$

wherein p represents pore size (m); P represents pressure applied to mercury (Pa); σ represents surface tension of mercury (0.485 N/m); and θ represents angle of contact between mercury and pore surface (130°).

Individual pore sizes p which are respective to different pressures P are obtained using the formula (1), and the distribution of the pore sizes p and cumulative pore volume are derived. Then, a pore size corresponding to 25% by volume in terms of cumulative pore volume and a pore size corresponding to 75% by volume in terms of cumulative pore volume are defined as the pore size p25 and the pore size p75, respectively.

Moreover, the ceramic sintered body according to the present embodiment is preferably designed to contain, in its interior, in addition to a compound containing Fe and Si, a compound composed of silicon and at least one of chromium, manganese, and copper. When a compound composed of silicon and at least one of chromium, manganese, and copper are included, although reasons are not clarified, the compound is considered to cause residual stress in main crystal phase and grain boundary phase, thus achieving an enhancement in fracture toughness, and also, in the event of grain boundary sliding which is a condition of fracture that occurs under high-temperature conditions, the compound behaves as if to act as a wedge to hinder sliding movement of silicon nitride particles, thus imparting higher strength and higher thermal shock resistance to the ceramic sintered body used under high-temperature conditions. Moreover, the compound composed of silicon and at least one of chromium, manganese, and copper serves as one of liquid phase components in a firing process, thus improving the sinterability of the ceramic sintered body.

It is preferable that the total content of iron, chromium, manganese, and copper in the interior is greater than or equal to 0.02% by mass but less than or equal to 3% by mass based on the total mass defined as 100% by mass of constituents of the interior of the ceramic sintered body.

Moreover, examples of the aforementioned compound composed of silicon and at least one of chromium, manganese, and copper include compounds that are expressed in compositional formula form as: $CrSi$, $Cr_3Si$, $CrSi_3$, $Cr_5Si_3$, $CrSi_2$, $MnSi$, $Mn_2Si$, $MnSi_2$, $Cu_2Si$, $CuSi$, $CuSi_2$, and $CuSi_3$.

Moreover, the ceramic sintered body according to the present embodiment is preferably designed to contain, in its interior, a compound composed of silicon and at least one of tungsten and molybdenum. This is because chromium, manganese, iron, and copper go into solid solution readily in a compound composed of silicon and at least one of tungsten and molybdenum, and, by virtue of the solid solution of these metal elements, uneven distribution of metal elements can be reduced, thus decreasing the possibility of fracture in the ceramic sintered body caused by the uneven distribution. It is preferable that the total content of tungsten and molybdenum is greater than or equal to 0.02% by mass but less than or equal to 3% by mass based on the total mass defined as 100% by mass of constituents of the interior of the ceramic sintered body. Moreover, examples of the compound composed of silicon and at least one of tungsten and molybdenum include compounds that are expressed in compositional formula form as: $W_5Si_3$, $W_3Si_2$, $WSi_2$, $Mo_5Si_3$, $Mo_3Si_2$, and $MoSi_2$. $W_5Si_3$ (JCPDS #81-1916), in particular, is desirable for use. Especially in a case where the compound composed of silicon and at least one of tungsten and molybdenum is tungsten silicide, it is preferable that the ratio $I(W_5Si_3)/I(WSi_2)$ is greater than or equal to 0.1, in which $I(W_5Si_3)$ denotes a peak intensity at (411) plane and (321) plane of $W_5Si_3$ obtained by the X-ray diffractometry, and $I(WSi_2)$ denotes a peak intensity at (101) plane and (103) plane of $WSi_2$ obtained by the X-ray diffractometry. Given the ratio of 0.1 or more, the ceramic sintered body tends to be more heat-resistant.

Moreover, the ceramic sintered body according to the present embodiment is preferably designed to contain magnesium aluminate. Magnesium aluminate is higher in resistance to corrosion by alkali than silicon nitride, wherefore the ceramic sintered body tends to be more resistant to corrosion by alkali.

Moreover, the ceramic sintered body according to the present embodiment is preferably designed so that the total content of rare-earth metal oxides is less than or equal to 2% by mass based on the total mass defined as 100% by mass of constituents of the ceramic sintered body.

In the case where the total content of rare-earth metal oxides is less than or equal to 2% by mass based on the total mass defined as 100% by mass of constituents of the ceramic sintered body, although reasons are not clarified, the ceramic sintered body tends to be more resistant to corrosion by acid. It is particularly preferable that the total content of rare-earth metal oxides is less than or equal to 0.1% by mass.

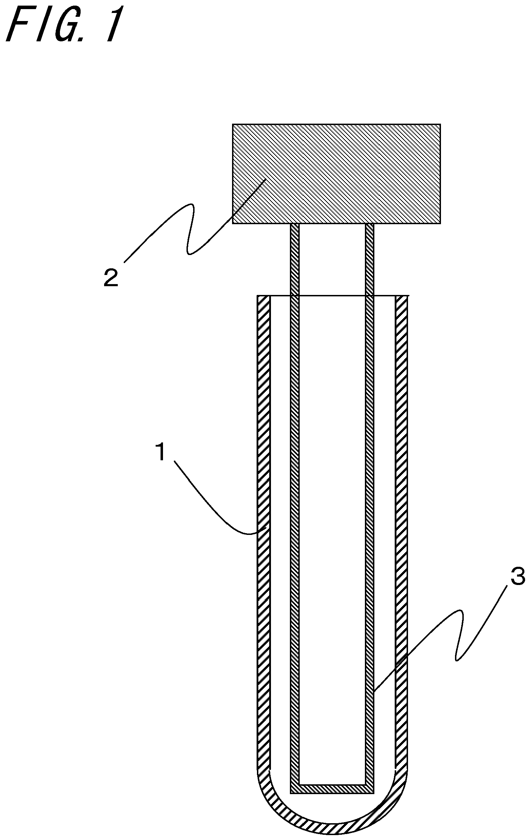

FIG. 1 is a vertical cross-sectional view showing a heater tube, which is one of members for molten metal that exemplifies an anticorrosion member formed of the ceramic sintered body according to the present embodiment. As shown in FIG. 1, the heater tube 1 is used to provide protection for a heater 3 immersed in molten metal, for example, molten aluminum while being connected to a heat-source supply power unit 2. The heater tube 1 is formed of the ceramic sintered body according to the present embodiment which excels in resistance to thermal shock, and is thus resistant to fracture even under repeated use. Moreover, with the presence of a compound containing Fe and Si scattering in the surface portion of the tube, molten metal is less likely to adhere to the surface portion, thus rendering the surface portion resistant to corrosion by molten metal. In addition, such an anticorrosion member is resistant to oxidation-induced discoloration.

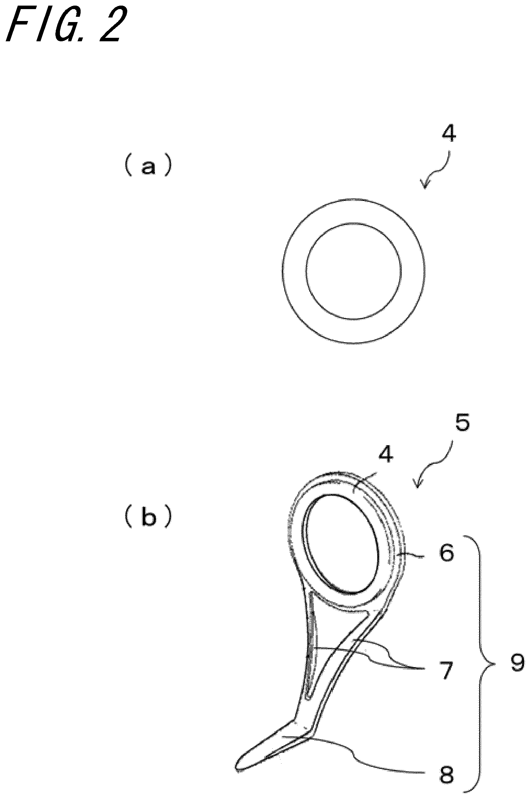

FIG. 2 is a diagram showing a fishing line guide ring which is an example of an anticorrosion member formed of the ceramic sintered body according to the present embodiment, and a fishing line guide equipped with the fishing line guide ring, and more specifically FIG. 2(a) is a plan view of the fishing line guide ring, and FIG. 2(b) is a perspective view of the fishing line guide equipped with the fishing line guide ring shown in FIG. 2(a).

As exemplified in FIG. 2, a fishing line guide ring 4 allows a fishing line (not shown in the drawing) to be guidedly inserted through its inside opening, and, a fishing line guide 5 comprises a retainer 6 for holding the fishing line guide ring 4, and more specifically the fishing line guide 5 is constructed by attaching the fishing line guide ring 4 to a frame body 9 composed of a support portion 7 of the retainer 6 and a fixing portion 8 configured to be fixed to a fishing line (not shown) which are integrally formed.

In such a fishing line guide 5, as described above, since the fishing line guide ring 4 is formed of the ceramic sintered body according to the present embodiment that excels in resistance to thermal shock, even if the fishing line guide ring 4 is subjected to heat at high temperature by friction in contact with a fishing line, the fishing line guide 5 is resistant to fracture.

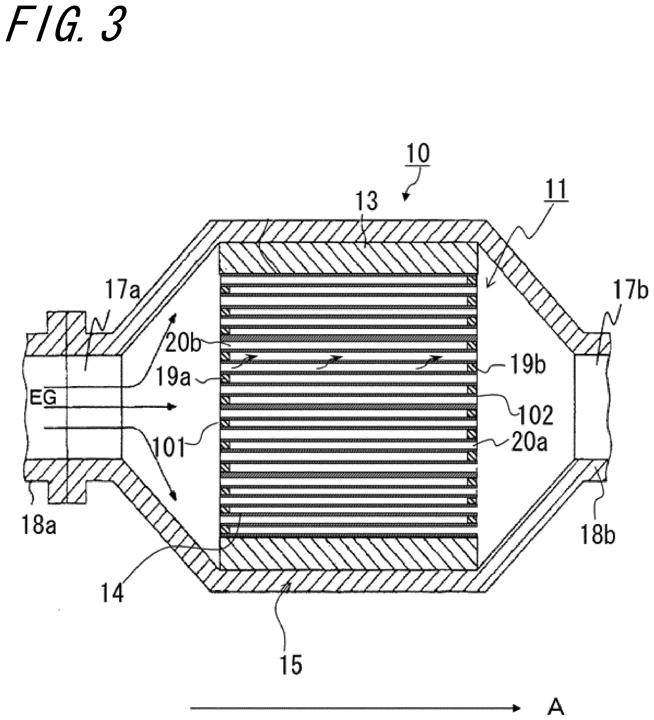

FIG. 3 is a schematic sectional view schematically showing an example of a filter formed of the ceramic sintered body according to the present embodiment and a gas treatment apparatus incorporating the filter.

As exemplified in FIG. 3, a gas treatment apparatus 10 comprises a honeycomb filter 11 formed of the ceramic sintered body according to the present embodiment, in which unsealed one end (101) of one fluid passing hole serves as an inlet, and unsealed other end (102) of the other fluid passing hole serves as an outlet, for allowing the passage of exhaust gas (EG) through the filter while causing particulates contained in the exhaust gas to collect on a partition portion 14.

The filter 11 according to this embodiment is stored in a case 15, with its outer periphery held by a heat insulator 13. The heat insulator 13 is made of at least one of ceramic fiber, glass fiber, carbon fiber, and ceramic whisker, for example. Moreover, the case 15 is made of stainless steel such for example as SUS303, SUS304, or SUS316, and has a cylindrical midportion and truncated cone-shaped ends. An inlet 17a of the case 15 for admission of exhaust gas and an outlet 17b thereof for discharge of exhaust gas are connected with a pipe 18a and a pipe 18b, respectively.

An internal combustion engine (not shown) such as a diesel engine or gasoline engine is connected to the inlet side of the gas treatment apparatus 10. Upon exhaust gas generated by the operation of the internal combustion engine being fed into the case 15 through the pipe 18a, the exhaust gas is introduced into an inflow path 20b of the filter 11. At this time, the flow of the exhaust gas is blocked by a sealing material 19b disposed on the outlet side of the apparatus. The exhaust gas, being restrained from flowing out, passes through the air-permeable partition portion 14 to be introduced into an adjacent outflow path 20a. When the exhaust gas passes through the partition portion 14, particulates in the exhaust gas are collected on the wall of the partition portion 14 and the surfaces of pores of the partition portion 14. the particulate-collected exhaust gas is discharged out of the outflow path 20b through the pipe 18b in a purified state.

According to such a gas treatment apparatus 10, since the filter 11 is formed of the ceramic sintered body which excels in resistance to thermal shock as above described, even if heat treatment is performed repeatedly on collected matters for burning removal, the gas treatment apparatus 10 is resistant to fracture.

The following describes a method of manufacturing the ceramic sintered body according to the present embodiment.

To begin with, there are prepared powder of metallic silicon and powder of silicon nitride having a β-phase transition rate of less than or equal to 20%, and, these powdery materials are mixed so that the mass ratio (metallic silicon powder)/(silicon nitride powder) is greater than or equal to 1 but less than or equal to 10 to obtain a powder mixture. Note that powder of metallic silicon may be causative of inadequate nitriding or inadequate sintering depending on its particle size, and it is thus advisable that metallic silicon powder in use should be less than or equal to 10 μm, or preferably less than or equal to 6 μm in particle size ($D_{90}$) which is a particle size corresponding to 90% cumulative pore volume based on the total sum of cumulative volume in a particle size distribution curve defined as 100%.

Moreover, as additives, there are prepared metal oxide powder made of at least one of aluminum oxide, silicon oxide, and zirconium oxide, calcium carbonate powder, magnesium aluminate powder, and ferric oxide powder. It is preferable that the metal oxide powder, the calcium carbonate powder, the magnesium aluminate powder, and the ferric oxide powder are contained in an amount of 3% to 4.5% by mass, an amount of 9.1% to 13.7% by mass, an amount of 2% to 3.1% by mass, and an amount of 1% to 1.7% by mass, respectively, based on the total mass defined as 100% by mass of the powder mixture and these powdery additives.

By making proper changes to the metal oxide powder content, the calcium carbonate powder content, the magnesium aluminate powder content, and the ferric oxide powder content, it is possible to adjust the gehlenite content and the calcium silicate content.

The ceramic sintered body containing, in its interior, in addition to a compound containing Fe and Si, a compound composed of silicon and at least one of chromium, manganese, and copper can be obtained by adding powder of at least one of chromium oxide, manganese oxide, and copper oxide in a total amount of greater than or equal to 0.02 part by mass but less than or equal to 4 parts by mass based on the total mass of the powder mixture and the powdery additives defined as 100 parts by mass.

Moreover, the ceramic sintered body containing, in its interior, a compound composed of silicon and at least one of tungsten and molybdenum can be obtained by adding powder of at least one of tungsten oxide and molybdenum oxide in an amount of greater than or equal to 0.5 part by mass but less than or equal to 1 part by mass based on the total mass defined as 100 parts by mass of the powder mixture and the powdery additives.

Then, together with solvent, those powdery materials in their respective predetermined weighed amounts are mixed and pulverized to prepare a slurry by a well-known technique using, for example, a barrel mill, a tumbling mill, a vibrating mill, a bead mill, a sand mill, or an agitator mill. As a pulverization medium used in the pulverizing process, while use can be made of, for example, a silicon nitride sintered body, a zirconium oxide sintered body, and an aluminum oxide sintered body, to minimize the influence of the pulverization medium when it becomes impurities after blended, it is desirable to use a pulverization medium made of a silicon nitride sintered body having the same or approximately the same composition as that of the ceramic sintered body to be produced.

In order for the ceramic sintered body to have a higher iron element content in its surface portion, the mixing and pulverizing process is preferably performed so that, following the completion of pulverization, ferric oxide particles have a specific surface area of greater than or equal to 0.5 $m^2/g$ but less than or equal to 50 $m^2/g$. Moreover, to obtain the ceramic sintered body containing no metallic silicon in its interior, the process is preferably performed so that, following the completion of pulverization, metallic silicon particles have a specific surface area of greater than or equal to 2 $m^2/g$. The specific surface areas of ferric oxide particles and metallic silicon particles can be set to the aforementioned levels by making proper changes to the outside diameter and the amount of the pulverization medium, and the pulverization time, for example.

Moreover, an improvement in moldability can be achieved by blending, in the slurry, an organic binder such as paraffin wax, PVA (polyvinyl alcohol), or PEG (polyethylene glycol) in a weighed amount of greater than or equal to 1 part by mass but less than or equal to 10 parts by mass based on the total mass defined as 100 parts by mass of the powder mixture and the powdery additives added to the powder mixture. In addition, a thickening stabilizer, a dispersant, a pH adjuster, an antifoam agent, and so forth may be added.

Then, the slurry is granulated into granules by a spray-drying granulator.

Next, the granules thus obtained are shaped into a molded body with a desired form having a relative density of 45 to 60% by means of pressure molding, CIP (Cold Isostatic Pressing) molding, or otherwise. The molded body may also be obtained by means of die-cast molding, injection molding, tape molding, powder rolling, or otherwise.

Next, after being placed in a silicon carbide-made sagger or a carbon-made sagger having its surface coated with silicon nitride sintered crystal grains, the molded body thus obtained is degreased in nitrogen or in a vacuum, for example. A temperature at which the degreasing process is performed is, although it depends on the type of an organic binder to be added, preferably set to be lower than or equal to 900°C, or more preferably set to by higher than or equal to 450°C but lower than or equal to 800°C. Such a process to remove a grease component such as an organic binder from the molded body is called a degreasing process, and the molded body in a degreased condition is called a degreased body.

The degreased body is then fired in an atmosphere of nitrogen at a temperature exceeding the degreasing temperature. At this time, metallic silicon (Si) contained in the added metallic silicon powder undergoes nitriding reaction with nitrogen gas ($N_2$) to yield silicon nitride ($Si_2N_4$), and the nitriding reaction causes a rise in relative density to 55 up to 70%, with a consequent decrease in firing shrinkage factor. This helps minimize firing-induced deformation.

It is advisable to cause the aforestated nitriding reaction to proceed in the following manner. In the metallic silicon-containing degreased body under the nitriding process, metallic silicon present in the surface part of the degreased body is the first to be nitrided, and subsequently metallic silicon present in the interior of the degreased body is nitrided over time. Therefore, in order to avoid inadequate nitriding especially in the interior of the degreased body, it is desirable to carry out nitriding at low temperature (first nitriding step) and thereafter nitriding at high temperature (second nitriding step).

In the first nitriding step, the degreased body is retained for 15 to 25 hours at a nitrogen partial pressure of 10 to 200 kPa and at a temperature of 1000 to 1200°C to cause nitriding in 10 to 70% by mass of metallic silicon contained in the degreased body. Then, in the second nitriding step, the degreased body is further retained for 5 to 15 hours at a temperature ranging from the temperature set for the first nitriding step to 1400°C to cause nitriding in residual metallic silicon in the degreased body. It is preferable that the temperature set for the second nitriding step is higher than the temperature set for the first nitriding step, and that the first nitriding step and the second nitriding step are successively conducted without a break.

Then, after being retained for 6 to 14 hours under conditions where the temperature keeps rising so that the firing temperature is higher than or equal to 1750°C but lower than or equal to 1850°C and the pressure of nitrogen falls in the range of 106 to 152 kPa, the body is cooled down at a temperature-lowering rate of higher than or equal to 210°C but lower than 240°C per hour. In this case, although reasons are not clarified, decomposition of silicon nitride in the surface portion is facilitated, thus allowing particles of compounds containing Fe and Si having an equivalent circle diameter of 0.05 $\mu$m or more but 5 $\mu$m or less to exist in a number of greater than or equal to $2.0 \times 10^4$ but less than or equal to $2.0 \times 10^5$ per 1 mm$^2$.

Moreover, to obtain the ceramic sintered body containing monticellite, the cooling is effected at a rate of higher than or equal to 210°C but lower than 230°C per hour, and, to obtain the ceramic sintered body containing merwinite, the cooling is effected at a rate of higher than or equal to 190°C but lower than 210°C per hour.

Moreover, to obtain the ceramic sintered body in which the surface portion is greater than the interior in the total sum of a monticellite content and a merwinite content, the retention is continued for 11 to 14 hours, with the firing temperature set to be higher than or equal to 1750°C but lower than 1800°C.

The following describes the case of producing the ceramic sintered body in the form of a porous body.

A kneaded product is formed by preparing a powder mixture in a manner similar to that adopted in the method of producing the ceramic sintered body as above described, adding a pore-forming agent such for example as polymethylmethacrylate (PMMA), polyvinyl butyral, graphite, starch, phenol resin, polystyrene resin, or polyethylene resin in an amount of greater than or equal to 1 part by mass but less than or equal to 13 parts by mass based on the total mass of the powder mixture and the aforementioned powdery materials added to the powder mixture defined as 100 parts by mass, obtaining a mixture by adding, in water, a molding aid, a plasticizer, and a lubricant such for example as celluloses including methylcellulose, carboxymethylcellulose, sodium carboxymethylcellulose, alcohols including polyvinyl alcohol, salts including lignosulfonate, waxes including paraffin wax and microcrystalline wax, and thermoplastic resins including polyvinyl alcohol (PVA), ethylene-vinyl acetate copolymer resin (EVA), liquid crystal polymer, and engineering plastics, and putting the resultant mixture in, for example, a universal agitator, a tumbling mill, or a V-shaped agitator to effect kneading. To obtain the ceramic sintered body in which the pore-size ratio p75/p25 is greater than or equal to 1.1 but less than or equal to 1.5, as the pore-forming agent, use can be made of one which is spherical in shape, and in which the ratio $d_{75}/d_{25}$, is greater than or equal to 1.05 but less than or equal to 1.45, in which $d_{75}$ denotes a pore size corresponding to 75% of cumulative pore volume in a pore-size cumulative distribution curve, and $d_{25}$ denotes a pore size corresponding to 25% of cumulative pore volume in the pore-size cumulative distribution curve.

The kneaded product is kneaded by a three-roll mill, a kneading machine, or the like, and the resultant porcelain clay in a plasticized condition is molded into a molded body of desired form by an extrusion machine. The molded body so obtained is fired in a manner similar to that adopted in the method of producing the ceramic sintered body as above described, whereby the porous ceramic sintered body can be obtained. Moreover, the filter and the antihalation member of the present embodiment can be produced by, for example, subjecting the ceramic sintered body to a heretofore known working operation, or by making proper changes to the way to form the molded body.

While examples of the present embodiments will be described hereinbelow, the present embodiments are not limited to these examples.

Example 1

To begin with, there were prepared metallic silicon powder having an average particle size ($D_{50}$) of 3 $\mu$m and silicon nitride powder having an average particle size ($D_{50}$) of 1 $\mu$m and a $\beta$-phase transition rate of 10% (in other words, an $\alpha$-phase transition rate of 90%), and, these powdery materials were mixed so that the mass ratio (metallic silicon powder)/(silicon nitride powder) stands at 5.4 to obtain a powder mixture. Note that the metallic silicon powder is of 5 $\mu$m in particle size ($D_{90}$) corresponding to 90% cumulative volume based on the total sum of cumulative volume in a particle size distribution curve defined as 100%.

Then, after putting aluminum oxide powder, calcium carbonate powder, magnesium aluminate powder, and ferric oxide powder in a barrel mill together with the aforestated powder mixture, water, and a medium for pulverization made of a silicon nitride sintered body, mixing and pulverizing operation was conducted until the specific surface area of the ferric oxide powder reached the value as listed in Table 1 while making adjustment to the outside diameter and the amount of the pulverization medium, and pulverization time. The aluminum oxide powder, the calcium carbonate powder, the magnesium aluminate powder, and the ferric oxide powder were contained in an amount of 3.7% by mass, an amount of 11.3% by mass, an amount of 2.6% by mass, and an amount of 1.4% by mass, respectively, based on the total mass defined as 100% by mass of the powder mixture and these powdery materials. After having been sifted through a sieve with a Number 200 mesh defined in the standard ASTM E 11-61, the resultant slurry was granulated into granules by a spray-drying granulator.

Next, the granules so obtained were subjected to CIP molding process, and then cut into a cylindrical bottomed molded body which is 173 mm in outside diameter, 150 mm in inside diameter, and 1152 mm in length.

Next, after having been placed in a silicon carbide-made sagger, the molded body was degreased while being retained for 5 hours in an atmosphere of nitrogen and at a temperature of 500°C. Subsequently, with a rise in temperature, the molded body was nitrided while being retained for 20 hours at 1050°C and then further retained for 10 hours at 1250°C at a nitrogen partial pressure of 150 kPa substantially composed of nitrogen. Moreover, with a further rise in temperature, the molded body was fired while being retained for 12 hours at 1775°C and under the pressure of nitrogen as listed in Table 1, and then cooled down at a temperature-lowering rate of 225°C per hour. In this way, there were obtained Sample Nos. 1 through 12 in the form of a heater tube 4 made of a ceramic sintered body that is 150 mm in outside diameter, 130 mm in inside diameter, and 1000 mm in length.

The amount of nitrogen contained in each sample was measured by nitrogen analytical equipment, and conversion from the nitrogen content to a silicon nitride content was performed. The calculation result showed that each and every sample has a silicon nitride content of greater than or equal to 80% by mass, and that silicon nitride constitutes 80% or above of the total mass thereof. Moreover, the condition of distribution of the individual elements present in the surface portion of each sample was examined by means of energy dispersive X-ray spectrometry, and crystals present in the surface portion were identified by the X-ray diffractometry. The analytical result indicated the existence of scattered iron silicide expressed in compositional formula form as: $FeSi_2$ in the surface portion of each sample.

Moreover, the number of particles of compounds having an equivalent circle diameter of 0.05 $\mu$m or more but 5 $\mu$m or less in the surface portion was determined by means of particle analysis involving a step of setting an analysis range at an area of $10.8 \times 10^4$ $\mu$m$^2$ (127 $\mu$m in transverse length and 85.3 $\mu$m in longitudinal length) under a scanning electron microscope of a magnification of 1000 times, a step of capturing an image of this range by a CCD camera, and a step of analyzing this image with use of IMAGE ANALYSIS SOFTWARE "AZO-KUN" (trademark) manufactured by Asahi Kasei Engineering Corporation. Table 1 shows results thereof.

Next, thermal shock tests were conducted.

More specifically, a test piece was cut from the heater tube 4 at its outer periphery so as to be 3 mm in thickness, 40 mm in dimension in an axial direction, and 4 mm in dimension in a direction perpendicular to the axial direction. After having been retained at 820°C, the test piece was dropped in water at 20°C, and, after the dropping, the test piece was visually checked in respect of the presence of a crack in a part thereof which corresponds to the surface portion of the ceramic sintered body. Then, with the retention temperature raised to 920°C, the same test as above was conducted.

Table 1 shows results thereof.

Next, oxidation tests were conducted on the samples.

More specifically, in each sample which was not subjected to the thermal shock test, the peak of each of iron, silicon, and oxygen contained in the compound which is greater than or equal to 0.05 $\mu$m but less than or equal to 5 $\mu$m in diameter on a circle-diameter basis in the surface portion was measured by means of energy dispersive X-ray spectrometry, and then each sample was retained for 200 hours in an aerial atmosphere and at a temperature of 900°C. After the retention, the sample was air-cooled, and then its surface portion was visually checked. In Table 1, a sample whose surface portion was discolored red is marked with "Red", whereas a sample free from surface portion discoloration is marked with a bar line "-". Once again, the peak of each of iron, silicon, and oxygen contained in the compound having an equivalent circle diameter of 0.05 $\mu$m or more but 5 $\mu$m or less in the surface portion was measured by means of energy dispersive X-ray spectrometry. In any of the compounds, a peak $P_{Fe}$ of iron, a peak $P_{Si}$ of silicon, and a peak $P_O$ of oxygen were identified before and after the retention. The relationship in level between the peak $P_{Si}$ of silicon and the peak $P_O$ of oxygen is listed in Table 1. A sample in which the relationship expressed as: $P_{Si} > P_O$ as observed before the retention is changed to a relationship expressed as: $P_{Si} < P_O$ after the retention is considered to undergo compound oxidation to a greater extent.

[Table 1]

| Sample No. | Specific surface area of ferric oxide powder (mm²/g) | Nitrogen pressure (kPa) | Number (number/mm²) | Thermal-shock resistant temperature | | Surface portion | Peak $P_{Si}$-Peak Po relationship | |
|---|---|---|---|---|---|---|---|---|
| | | | | 820°C | 920°C | | Before retention | After retention |
| 1 | 0.4 | 160 | $1.0 \times 10^4$ | Present | Present | - | $P_{Si} > P_O$ | $P_{Si} > P_O$ |
| 2 | 0.5 | 152 | $2.0 \times 10^4$ | Absent | Present | - | $P_{Si} > P_O$ | $P_{Si} > P_O$ |
| 3 | 0.5 | 127 | $3.2 \times 10^4$ | Absent | Present | - | $P_{Si} > P_O$ | $P_{Si} > P_O$ |
| 4 | 8 | 127 | $4.3 \times 10^4$ | Absent | Present | - | $P_{Si} > P_O$ | $P_{Si} > P_O$ |
| 5 | 15 | 127 | $5.1 \times 10^4$ | Absent | Absent | - | $P_{Si} > P_O$ | $P_{Si} > P_O$ |
| 6 | 22 | 127 | $6.3 \times 10^4$ | Absent | Absent | - | $P_{Si} > P_O$ | $P_{Si} > P_O$ |
| 7 | 29 | 127 | $7.1 \times 10^4$ | Absent | Absent | - | $P_{Si} > P_O$ | $P_{Si} > P_O$ |
| 8 | 36 | 127 | $8.2 \times 10^4$ | Absent | Absent | - | $P_{Si} > P_O$ | $P_{Si} > P_O$ |
| 9 | 43 | 127 | $9.2 \times 10^4$ | Absent | Absent | - | $P_{Si} > P_O$ | $P_{Si} > P_O$ |
| 10 | 50 | 127 | $1.0 \times 10^5$ | Absent | Absent | - | $P_{Si} > P_O$ | $P_{Si} > P_O$ |
| 11 | 50 | 106 | $2.0 \times 10^5$ | Absent | Absent | - | $P_{Si} > P_O$ | $P_{Si} > P_O$ |
| 12 | 57 | 101 | $2.8 \times 10^5$ | Absent | Absent | Red | $P_{Si} > P_O$ | $P_{Si} < P_O$ |

As shown in Table 1, in Sample Nos. 2 through 11, compounds containing Fe and Si are scattered in the surface portion, and particles of the compounds having an equivalent circle diameter of 0.05 $\mu$m or more but 5 $\mu$m or less are present in a number of greater than or equal to $2.0 \times 10^4$ but less than or equal to $2.0 \times 10^5$ per 1 mm². These samples showed no sign of cracking in the surface portion after retention at 820°C and subsequent dropping in water at 20°C in the thermal shock test. That is, in point of thermal shock resistance, Sample Nos. 2 through 11 can be considered to be superior to Sample No. 1. Moreover, the result of oxidation tests showed that, in Sample Nos. 2 through 11, the relationship in level between the peak $P_{Si}$ and the peak $P_O$ remained unchanged before and after the retention. That is, Sample Nos. 2 through 11 can be considered to be resistant to oxidation-induced discoloration.

Sample Nos. 5 through 11, in particular, showed no sign of cracking in the surface portion even after retention at 920°C and subsequent dropping in water at 20°C in the thermal shock test. That is, these samples can be considered to have higher thermal shock resistance.

Example 2

Next, cylindrical bottomed molded bodies were formed in the same manner as that for forming Sample No. 3, except that, as additives, powder of metal oxide as listed in Table 2, powder of calcium carbonate, and powder of magnesium aluminate were used, and the metal oxide powder, the calcium carbonate powder, and the magnesium aluminate powder were contained in an amount as listed in Table 2, an amount of 11.3% by mass, and an amount of 2.6% by mass, respectively, based on the total mass defined as 100% by mass of the powder mixture and the additives.

Then, after having been placed in a silicon carbide-made sagger, the molded body was degreased while being retained for 5 hours in an atmosphere of nitrogen and at a temperature of 500°C. Subsequently, with a rise in temperature, the molded body was nitrided while being retained for 20 hours at 1050°C and then further retained for 10 hours at 1250°C at a nitrogen partial pressure of 150 kPa substantially composed of nitrogen. Moreover, with a further rise in temperature, the molded body was fired while being retained for 12 hours at a firing temperature as listed in Table 2 and under the pressure of nitrogen defined as atmospheric pressure, and then cooled down at a temperature-lowering rate as listed in Table 2. In this way, there were obtained Sample Nos. 13 through 27 in the form of a heater tube 4 made of a ceramic sintered body that is 150 mm in outside diameter, 130 mm in inside diameter, and 1000 mm in length.

Then, in Sample Nos. 13 through 27, identification of crystals present in the grain boundary phase was made by the X-ray diffractometry. Table 2 shows a listing of identified components. In the table, a bar line "-" indicates that monticellite, merwinite, gehlenite, or calcium silicate was not identified. Moreover, the amount of nitrogen contained in each of Sample Nos. 13 through 27 was measured by nitrogen analytical equipment, and conversion from the nitrogen content to a silicon nitride content was performed. The calculation result showed that each and every sample has a silicon nitride content of greater than or equal to 80% by mass.

Moreover, Sample Nos. 13 through 27 were immersed in each of a 30-mass% hydrochloric acid solution, a 60-mass% nitric acid solution, a 95-mass% sulfuric acid solution, and a 30-mass% sodium hydroxide solution for 100 hours. After that, a decrease in mass per unit area was examined. The values of mass reduction are listed in Table 2. Note that the temperature of each solution was set at 90°C.

[Table 2]

| Sample No. | Metal oxide | Content (% by mass) | Firing temperature (°C) | Temperature-lowering rate (hour/°C) | Identified components | | | Mass reduction per unit area (mg/cm$^2$) | | | |
|---|---|---|---|---|---|---|---|---|---|---|---|
| | | | | | | | | 30-mass% hydrochloric acid solution | 60-mass% nitric acid solution | 95-mass% sulfuric acid solution | 30-mass% sodium hydroxide solution |
| 13 | Aluminum oxide | 3.7 | 1780 | 240 | - | - | - | 15 | 8 | 0.09 | 0.32 |
| 14 | Aluminum oxide | 3.7 | 1780 | 220 | Monticellite | - | Gehlenite | 10 | 4 | 0.05 | 0.22 |
| 15 | Aluminum oxide | 3.7 | 1780 | 200 | Merwinite | - | Gehlenite | 10 | 4 | 0.05 | 0.22 |
| 16 | Aluminum oxide | 3.7 | 1790 | 180 | Monticellite | Merwinite | Gehlenite | 9 | 3 | 0.04 | 0.2 |
| 17 | Aluminum oxide | 0.5 | 1780 | 220 | Monticellite | - | Calcium silicate | 10 | 4 | 0.05 | 0.22 |
| 18 | Aluminum oxide | 0.5 | 1780 | 200 | Merwinite | - | Calcium silicate | 10 | 4 | 0.05 | 0.22 |
| 19 | Aluminum oxide | 0.5 | 1790 | 180 | Monticellite | Merwinite | Calcium silicate | 9 | 3 | 0.04 | 0.2 |
| 20 | Silicon oxide | 3.7 | 1780 | 240 | - | - | - | 16 | 9 | 0.1 | 0.35 |
| 21 | Silicon oxide | 3.7 | 1780 | 220 | Monticellite | - | - | 12 | 6 | 0.07 | 0.24 |
| 22 | Silicon oxide | 3.7 | 1780 | 200 | Merwinite | - | - | 11 | 6 | 0.07 | 0.24 |
| 23 | Silicon oxide | 3.7 | 1790 | 180 | Monticellite | Merwinite | - | 11 | 5 | 0.06 | 0.23 |
| 24 | Zirconium oxide | 3.7 | 1780 | 240 | - | - | - | 16 | 9 | 0.1 | 0.35 |

(continued)

| Sample No. | Metal oxide | Content (% by mass) | Firing temperature (°C) | Temperature-lowering rate (hour/°C) | Identified components | | | Mass reduction per unit area (mg/cm$^2$) | | | |
|---|---|---|---|---|---|---|---|---|---|---|---|
| | | | | | | | | 30-mass% hydrochloric acid solution | 60-mass% nitric acid solution | 95-mass% sulfuric acid solution | 30-mass% sodium hydroxide solution |
| 25 | Zirconium oxide | 3.7 | 1780 | 220 | Monticellite | - | - | 12 | 6 | 0.07 | 0.24 |
| 26 | Zirconium oxide | 3.7 | 1780 | 200 | Merwinite | - | - | 11 | 6 | 0.07 | 0.24 |
| 27 | Zirconium oxide | 3.7 | 1790 | 180 | Monticellite | Merwinite | - | 11 | 5 | 0.06 | 0.23 |

As shown in Table 2, by virtue of the inclusion of at least one of monticellite and merwinite in the grain boundary phase of silicon nitride crystal, Sample Nos. 14 through 19, Sample Nos. 21 through 23, and Sample Nos. 25 through 27 are lower than Sample Nos. 13, 20, and 24 in the amount of mass reduction after 100-hour immersion in each solution.

In Sample Nos. 14 through 19, in particular, in addition to the aforementioned components, at least one of gehlenite and calcium silicate is included, wherefore the amount of mass reduction after 100-hour immersion in each solution is particularly small.

As seen in the result, as compared with Sample Nos. 13, 20, and 24, Sample Nos. 14 through 19, Sample Nos. 21 through 23, and Sample Nos. 25 through 27 have, in the grain boundary phase, a lower content of amorphous phase which is susceptible to corrosion by an acid or alkaline component, and can therefore be considered to be capable of maintaining higher mechanical strength even under exposure to an acid or alkaline component.

Example 3

To begin with, in the same manner as that for forming Sample Nos. 14 and 16, there were formed Sample Nos. 28 and 29 in the form of a square substrate which is 5 mm in thickness and 15 mm square, in which the ratio $\{(I_1 + I_2)/I_0 \times 100\}$ is greater than or equal to 4% in the surface portion.

In this case, instead of the CIP molding technique, a uniaxial press-forming technique was adopted in the molding process.

In addition, Sample No. 30 in which the ratio $\{(I_1 + I_2)/I_0 \times 100\}$ is less than 4% was formed in the following manner. A molded body which constitutes Sample No. 30 was prepared by the same method as that for forming the molded body of Sample No. 16. Then, after having been placed in a silicon carbide-made sagger, the molded body of No. 30 was degreased while being retained for 5 hours in an atmosphere of nitrogen and at a temperature of 500°C. Subsequently, with a rise in temperature, the molded body was nitrided while being retained for 20 hours at 1050°C and then further retained for 10 hours at 1250°C at a nitrogen partial pressure of 150 kPa substantially composed of nitrogen. Moreover, with a further rise in temperature, the molded body was fired while being retained for 10 hours at 1730°C and under the pressure of nitrogen defined as atmospheric pressure, and then cooled down at a temperature-lowering rate of 220°C per hour. In this way, there was obtained Sample No. 30 in the form of a square substrate which is 5 mm in thickness and 15 mm square.

Then, in the surface portion of each sample, the peak intensity $I_0$ of silicon nitride, the peak intensity $I_1$ of monticellite, and the peak intensity $I_2$ of merwinite were measured by the X-ray diffractometry, and the ratio $\{(I_1 + I_2)/I_0 \times 100\}$ was derived by calculation.

Next, Vickers hardness of each sample was measured in conformance with JIS R 1610-2003 (ISO 14705: 2000 (MOD)) under conditions where experimental force is 9.8 N and retention time is 15 seconds. Table 3 shows a listing of the aforementioned ratio and Vickers hardness.

[Table 3]

| Sample No. | Ratio $\{(I_1 + I_2)/I_0 \times 100\}$ (%) | Vickers hardness (GPa) |
|---|---|---|
| 28 | 4.9 | 13.8 |
| 29 | 4.0 | 13.8 |
| 30 | 3.4 | 12.8 |

As will be understood from the results shown in Table 3, Sample Nos. 28 and 29 in which the ratio is greater than or equal to 4% is higher in Vickers hardness and thus in wear and abrasion resistance than Sample No. 30 in which the ratio is less than 4%.

Example 4

To begin with, in a manner similar to that for forming Sample No. 28, there was formed Sample No. 31 in the form of a square substrate which is 5 mm in thickness and 15 mm square, in which the surface portion has a higher monticellite content than the interior.

In addition, Sample No. 32 in which the interior has a higher monticellite content than the surface portion was formed in the following manner. A molded body which constitutes Sample No. 32 was prepared by the same method as that for forming the molded body of Sample No. 31. Then, after having been placed in a silicon carbide-made sagger, the molded body of No. 32 was degreased while being retained for 5 hours in an atmosphere of nitrogen and at a temperature of 500°C. Subsequently, with a rise in temperature, the molded body was nitrided while being retained for 20 hours at 1050°C and then further retained for 10 hours at 1250°C at a nitrogen partial pressure of 150 kPa substantially composed of nitrogen. Moreover, with a further rise in temperature, the molded body was fired while being retained for 10 hours at 1730°C and under the pressure of nitrogen defined as atmospheric pressure, and then cooled down at a temperature-lowering rate of 220°C per hour. In this way, there was obtained Sample No. 32 in the form of a square substrate which is 5 mm in thickness and 15 mm square.

In Sample Nos. 31 and 32, whether or not the monticellite content in the surface portion is higher than that in the interior was determined by the measurement process as stated previously in Description of Embodiments.

Next, Vickers hardness of each of Sample Nos. 31 and 32 was measured in conformance with JIS R 1610-2003 (ISO 14705: 2000 (MOD)) under conditions where experimental force is 9.8 N and retention time is 15 seconds for examination of wear and abrasion resistance.

The results showed that Sample No. 31 has Vickers hardness of 13.8 GPa, whereas Sample No. 32 has Vickers hardness of 12.7 GPa. That is, in point of wear and abrasion resistance, Sample No. 31 in which the surface portion has a higher monticellite content than the interior has been found to be superior to Sample No. 32 in which the interior has a higher monticellite content than the surface portion.

Example 5

To begin with, after putting aluminum oxide powder, calcium carbonate powder, magnesium aluminate powder, and ferric oxide powder in a barrel mill together with the powder mixture prepared in the formation of Example 1, water, and a medium for pulverization made of a silicon nitride sintered body, mixing and pulverizing operation was conducted until the specific surface area of the ferric oxide powder reached 25 m$^2$/g and the specific surface area of the metallic silicon powder reached the value as listed in Table 4 while making adjustment to the outside diameter and the amount of the pulverization medium, and pulverization time.

The aluminum oxide powder, the calcium carbonate powder, the magnesium aluminate powder, and the ferric oxide powder were contained in an amount of 3.7% by mass, an amount of 11.3% by mass, an amount of 2.6% by mass, and an amount of 1.4% by mass, respectively, based on the total mass defined as 100% by mass of the powder mixture and these powdery materials.

From then on, the same procedural steps as those adopted in Example 1 have been followed until after the completion of nitriding process. After that, the resultant body has been fired while being retained for 12 hours at 1775°C and under the pressure of nitrogen of 127 Kpa, and then cooled down at a temperature-lowering rate of 225°C per hour. In this way, there were obtained Sample Nos. 33 through 35 in the form of a heater tube 4 made of a ceramic sintered body that is 150 mm in outside diameter, 130 mm in inside diameter, and 1000 mm in length.

After cutting a test piece from each sample, the presence or absence of metallic silicon in the interior of the test piece was determined, using the X-ray diffractometry, by examining the presence or absence of a peak at a diffraction angle (2θ) (ranging from 28° to 29°) corresponding to metallic silicon. Table 4 shows results thereof.

Then, after each sample has been retained for 250 hours in an aerial atmosphere and at a temperature of 900°C, the presence or absence of a crack was determined by visual observation.

[Table 4]

| Sample No. | Specific surface area of metallic silicon powder (mm$^2$/g) | Metallic silicon | Crack |
| --- | --- | --- | --- |
| 33 | 1 | Present | Present |
| 34 | 2 | Absent | Absent |
| 35 | 3.7 | Absent | Absent |

As will be understood from the results shown in Table 4, as compared with Sample No. 33, Sample Nos. 34 and 35 containing no metallic silicon in the interior were more resistant to cracking even when they were subjected to high temperature.

Example 6

To begin with, a kneaded product was formed by adding starch serving as a pore-forming agent in an amount of 5 part by mass based on the total mass of the powder mixture prepared in the process for forming Example 2, aluminum oxide powder, calcium carbonate powder, and magnesium aluminate powder defined as 100 parts by mass, obtaining a mixture by adding a molding aid, a plasticizer, and a lubricant in water, and putting the resultant mixture in a universal agitator to effect kneading. The starch used as a pore-forming agent was designed so that the shape is spherical, and

the ratio $d_{75}/d_{25}$ of a pore size corresponding to 75% of cumulative pore volume ($d_{75}$) to a pore size corresponding to 25% of cumulative pore volume ($d_{25}$) on the basis of a pore-size cumulative distribution curve, takes on the value as listed in Table 5.

Next, a molded body was obtained by putting the porcelain clay in a horizontal extrusion machine equipped with a mold for obtaining a filter 11 as shown in FIG. 3, molding it into a honeycomb form under pressure, drying, and cutting the honeycomb formed product in a desired length.

Then, the molded bodies corresponding to individual samples were placed on a firing stand in an electric furnace in an inlet-downward fashion, and was fired while being retained for 6 hours at a firing temperature of 1700°C. In this way, there were obtained Sample Nos. 36 through 41 in the form of a honeycomb filter which is 144 mm in outside diameter, 152 mm in height, 0.2 mm in partition portion's thickness, and 300 CPI in the total number of inflow paths 20b and outflow paths 20a at a section perpendicular to the axial direction A. Note that the inflow path 20b has a diameter which is 1.4 times larger than the diameter of the outflow path 20a, and, in each sample, the porosity of the partition portion 14 and the average pore size are set at 45% by volume and 14 $\mu$m, respectively.

Moreover, for thermal-shock resistance evaluation, heat was applied to the outlet (102) of the filter 11 alone, and, the temperature of the inlet (101) and the temperature of the outlet (102) when cracking occurred in the filter 11 were measured. The difference between the temperatures was defined as thermal-shock resistant temperature, and Table 5 shows a listing of thermal-shock resistant temperature.

[Table 5]

| Sample No. | Pore-forming agent | Ceramic sintered body | Thermal-shock resistant temperature (°C) |
|---|---|---|---|
| | Ratio (d75/d25) | Ratio (d75/d25) | |
| 36 | 1.05 | 1.1 | 840 |
| 37 | 1.15 | 1.2 | 830 |
| 38 | 1.2 | 1.25 | 830 |
| 39 | 1.25 | 1.3 | 830 |
| 40 | 1.45 | 1.5 | 820 |
| 41 | 1.55 | 1.6 | 800 |

As seen in the results shown in Table 5, in Sample Nos. 36 through 40 in which the pore-size ratio (p75/p25) is greater than or equal to 1.1 but less than or equal to 1.5, variations in pore size were reduced. That is, in point of thermal shock resistance, Sample Nos. 36 through 40 are superior to Sample No. 41 in which the pore-size ratio p75/p25 exceeded 1.5, and can thus be considered to be more resistant to cracking even under repeated use for heating treatment.

Reference Signs List

1: Heater tube
2: Heat-source supply power unit
3: Heater
4: Fishing line guide ring
5: Fishing line guide
6: Retainer
7: Support portion
8: Fixing portion
9: Frame body
10: Gas treatment apparatus
11: Filter
13: Heat insulator
14: Partition portion
15: Case
17a: Inlet
17b: Outlet
18: Pipe

19a, 19b: Sealing material
20a: Outflow path
20b: Inflow path

**Claims**

1. A ceramic sintered body, comprising:

   silicon nitride in an amount of greater than or equal to 80% by mass based on a total mass of the ceramic sintered body,
   iron silicide being scattered in a surface portion of the ceramic sintered body,
   particles of the iron silicide having an equivalent circle diameter of 0.05 $\mu$m or more but 5 $\mu$m or less being present in a number of greater than or equal to $2.0 \times 10^4$ but less than or equal to $2.0 \times 10^5$ per 1 $mm^2$,
   the ceramic sintered body further comprising aluminum and calcium in the grain boundary phase, a content of the calcium on CaO basis being greater than or equal to 2% by mass but less than or equal to 8% by mass based on the total mass of the ceramic sintered body.

2. The ceramic sintered body according to claim 1,
   wherein a content of the aluminum on $Al_2O_3$ basis is greater than or equal to 2% by mass but less than or equal to 8% by mass based on the total mass of the ceramic sintered body.

3. The ceramic sintered body according to claim 1 or 2, further comprising at least one of chrome, manganese and copper,
   wherein a content of iron, chrome, manganese and copper is greater than or equal to 0.02% by mass but less than or equal to 3% by mass based on the total mass of the ceramic sintered body.

4. The ceramic sintered body according to any one of claims 1 to 3,
   wherein at least one of monticellite and merwinite is included in a crystal grain boundary phase of the siliconnitride.

5. The ceramic sintered body according to claim 4,
   wherein a total sum of a content of the monticellite and a content of the merwinite in the surface portion is greater than a total sum of a content of the monticellite and a content of the merwinite in an interior of the ceramic sintered body.

6. The ceramic sintered body according to claim 4 or 5,
   wherein, in the surface portion, a ratio $\{(I_1 + I_2)/I_0 \times 100\}$ is greater than or equal to 4%,
   in which $I_1$ denotes a peak intensity of the monticellite at a diffraction angle ranging from 34° to 35° obtained by an X-raydiffractometry, $I_2$ denotes apeak intensity of the merwinite at a diffraction angle ranging from 34° to 35° obtained by an X-ray diffractometry, and $I_0$ denotes a peak intensity of the silicon nitride at a diffraction angle ranging from 27° to 28° obtained by an X-ray diffractometry.

7. The ceramic sintered body according to any one of claims 4 to 6,
   wherein at least one of gehlenite and calcium silicate is included in the crystal grain boundary phase.

8. The ceramic sintered body according to any one of claims 1 to 7,
   wherein the interior contains no metallic silicon.

9. The ceramic sintered body according to any one of claims 1 to 8,
   wherein the ceramic sintered body is formed as a porous body, and a ratio p75/p25 is greater than or equal to 1.1 but less than or equal to 1.5,
   in which p75 denotes a pore size corresponding to 75% of cumulative pore volume in a pore-size cumulative distribution curve, and p25 denotes a pore size corresponding to 25% of cumulative pore volume in the pore-size cumulative distribution curve.

10. An anticorrosion member, comprising:

    the ceramic sintered body according to any one of claims 1 to 9.

**11.** A filter, comprising:

the ceramic sintered body according to any one of claims 1 to 9.

**12.** An antihalation member, comprising:

the ceramic sintered body according to any one of claims 1 to 9.

**Patentansprüche**

**1.** Ein keramischer Sinterkörper, aufweisend:

Siliciumnitrid in einer Menge von größer oder gleich 80 Masse-%, basierend auf einer Gesamtmasse des keramischen Sinterkörpers,
wobei Eisensilicid in einem Oberflächenabschnitt des keramischen Sinterkörpers verteilt ist,
wobei Partikel des Eisensilicids mit einem äquivalenten Kreisdurchmesser von 0,05 μm oder mehr, jedoch 5 μm oder weniger, in einer Anzahl von mehr als oder gleich $2{,}0 \times 10^4$, aber weniger als oder gleich $2{,}0 \times 10^5$ pro 1 mm$^2$ vorliegen,
wobei der keramische Sinterkörper ferner Aluminium und Calcium in der Korngrenzphase aufweist,
wobei eine Menge des Calciums auf CaO-Basis größer als oder gleich 2 Masse% ist, jedoch weniger als oder gleich 8 Masse%, basierend auf der Gesamtmasse des keramischen Sinterkörpers.

**2.** Der keramische Sinterkörper nach Anspruch 1,
wobei eine Menge des Aluminiums auf $Al_2O_3$-Basis größer als oder gleich 2 Masse% ist, jedoch weniger als oder gleich 8 Masse%, basierend auf der Gesamtmasse des keramischen Sinterkörpers.

**3.** Der keramische Sinterkörper nach Anspruch 1 oder 2, ferner aufweisend zumindest eines von Chrom, Mangan und Kupfer,
wobei eine Menge von Eisen, Chrom, Mangan und Kupfer größer als oder gleich 0,02 Masse% ist, jedoch weniger als oder gleich 3 Masse%, basierend auf der Gesamtmasse des keramischen Sinterkörpers.

**4.** Der keramische Sinterkörper nach einem der Ansprüche 1 bis 3,
wobei mindestens einer von Monticellit und Merwinit in einer Kristallkorngrenzphase des Siliciumnitrids enthalten ist.

**5.** Der keramische Sinterkörper nach Anspruch 4,
wobei eine Gesamtsumme einer Menge des Monticellits und einer Menge des Merwinits in dem Oberflächenabschnitt größer ist als eine Gesamtsumme einer Menge des Monticellits und einer Menge des Merwinits in einem Inneren des keramischen Sinterkörpers.

**6.** Der keramische Sinterkörper nach Anspruch 4 oder 5,
wobei in dem Oberflächenabschnitt ein Verhältnis $\{(I_1 + I_2) / I_0 \times 100\}$ größer als oder gleich 4% ist,
wobei $I_1$ eine Peakintensität des Monticellits bei einem Beugungswinkel im Bereich von 34° bis 35° bezeichnet, erhalten durch Röntgendiffraktometrie, $I_2$ eine Peakintensität des Merwinits bei einem Beugungswinkel im Bereich von 34° bis 35° bezeichnet, erhalten durch Röntgendiffraktometrie, und $I_0$ eine Peakintensität des Siliciumnitrids bei einem Beugungswinkel im Bereich von 27° bis 28° bezeichnet, erhalten durch Röntgendiffraktometrie.

**7.** Der keramische Sinterkörper nach einem der Ansprüche 4 bis 6,
wobei mindestens eines von Gehlenit und Calciumsilikat in der Kristallkorngrenzphase enthalten ist.

**8.** Der keramische Sinterkörper nach einem der Ansprüche 1 bis 7,
wobei das Innere kein metallisches Silizium enthält.

**9.** Der keramische Sinterkörper nach einem der Ansprüche 1 bis 8,
wobei der keramische Sinterkörper als ein poröser Körper ausgebildet ist und ein Verhältnis p75 / p25 größer als oder gleich 1,1 aber kleiner als oder gleich 1,5 ist,
wobei p75 eine Porengröße bezeichnet, die 75% des kumulativen Porenvolumens in einer kumulativen Verteilungskurve der Porengröße entspricht, und p25 eine Porengröße bezeichnet, die 25% des kumulativen Porenvolumens in der kumulativen Verteilungskurve der Porengröße entspricht.

10. Ein Antikorrosionselement, aufweisend:

den keramischen Sinterkörper nach einem der Ansprüche 1 bis 9.

11. Ein Filter, aufweisend:

den keramischen Sinterkörper nach einem der Ansprüche 1 bis 9.

12. Ein Lichthofschutzelement, aufweisend:

den keramischen Sinterkörper nach einem der Ansprüche 1 bis 9.

**Revendications**

1. Corps fritté en céramique comprenant
du nitrure de silicium dans une quantité supérieure ou égale à 80 % en poids, basé sur le poids total du corps fritté en céramique,
du siliciure de fer étant dispersé sur une partie de la surface du corps fritté en céramique,
des particules de siliciure de fer ayant un diamètre équivalent du cercle de 0,05 $\mu$m ou plus mais 5 $\mu$m ou moins, étant présentes dans un nombre supérieur ou égal à 2,0 x $10^4$ mais moins que ou égal à 2,0 x $10^5$ par 1 mm$^2$, le corps fritté en céramique comprenant en outre de l'aluminium et du calcium dans la phase de la limite de grain, la teneur en calcium dans une base de CaO étant supérieure ou égale à 2 % en poids mais inférieure ou égale à 8 % en poids, basé sur le poids total du corps fritté en céramique.

2. Corps fritté en céramique selon la revendication 1,
dans lequel la teneur en aluminium dans une base de $Al_2O_3$ est supérieure ou égale à 2 % en poids mais inférieure ou égale à 8 % en poids, basé sur le poids total du corps fritté en céramique.

3. Corps fritté en céramique selon la revendication 1 ou 2, comprenant en outre au
moins un élément parmi le chrome, le manganèse et le cuivre,
dans lequel la teneur en fer, chrome, manganèse et cuivre est supérieure à ou égale à 0,02 % en poids mais inférieure ou égale à 3% en poids, basé sur le poids total du corps fritté en céramique.

4. Corps fritté en céramique selon l'une quelconque des revendications 1 à 3,
dans lequel au moins un élément parmi la monticellite et la merwinite est inclus dans une phase de cristal de la limite de grain du nitrure de silicium.

5. Corps fritté en céramique selon la revendication 4,
dans lequel la somme totale de la teneur en monticellite et de la teneur en merwinite sur la partie de la surface est supérieure à la somme totale de la teneur en monticellite et de la teneur en merwinite à l'intérieur du corps fritté en céramique.

6. Corps fritté en céramique selon la revendication 4 ou 5,
dans lequel, dans la partie de la surface, un rapport $\{(I_1 + I_2) / I_0 \times 100\}$ est supérieur ou égal à 4 %,
dans lequel $I_1$ désigne une intensité maximale de la monticellite à un angle de diffraction allant de 34° à 35° obtenue par diffractométrie à rayons X, $I_2$ désigne une intensité maximale de la merwinite à un angle de diffraction allant de 34° à 35° obtenue par diffractométrie à rayons X, et $I_0$ désigne une intensité maximale du nitrure de silicium à un angle de diffraction allant de 27° à 28° obtenue par diffractométrie à rayons X.

7. Corps fritté en céramique selon l'une quelconque des revendications 4 à 6,
dans lequel au moins un élément parmi la gehlénite et le silicate de calcium est inclus dans la phase de cristal de la limite de grain.

8. Corps fritté en céramique selon l'une quelconque des revendications 1 à 7,
dans lequel l'intérieur ne contient pas de silicium métallique.

9. Corps fritté en céramique selon l'une quelconque des revendications 1 à 8,
dans lequel le corps fritté en céramique est sous forme de corps poreux et le rapport p75/p25 est supérieur ou égal à 1,1 mais inférieur ou égal à 1,5,
dans lequel p75 désigne une taille de pores correspondant à 75 % de volume poreux cumulatif dans une courbe de distribution cumulative de dimension de pores, et p25 désigne une taille de pores correspondant à 25 % de volume poreux cumulatif dans une courbe de distribution cumulative de dimension de pores.

10. Elément anticorrosion comprenant
le corps fritté en céramique selon l'une quelconque des revendications 1 à 9.

11. Filtre comprenant
le corps fritté en céramique selon l'une quelconque des revendications 1 à 9.

12. Membre anti-halo comprenant
le corps fritté en céramique selon l'une quelconque des revendications 1 à 9.

# FIG. 1

# FIG. 2

(a)

4

(b)

5

4

6

7

9

8

*FIG. 3*

**EP 3 006 420 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4717635 B
- JP 2011133011 A
- JP 9227236 A